(19) **Europäisches Patentamt / European Patent Office / Office européen des brevets**

(11) **EP 3 991 263 B1**

(12) **FASCICULE DE BREVET EUROPEEN**

(45) Date de publication et mention de la délivrance du brevet:
**07.06.2023 Bulletin 2023/23**

(21) Numéro de dépôt: **20733861.7**

(22) Date de dépôt: **25.06.2020**

(51) Classification Internationale des Brevets (IPC):
**H02J 3/36** *(2006.01)* **H02J 3/46** *(2006.01)*
**H02J 5/00** *(2016.01)*

(52) Classification Coopérative des Brevets (CPC):
**H02J 3/36; H02J 3/46; H02J 5/00;** Y02E 60/60

(86) Numéro de dépôt international:
**PCT/EP2020/067927**

(87) Numéro de publication internationale:
**WO 2020/260519 (30.12.2020 Gazette 2020/53)**

(54) **PROCEDE DE COMMANDE D'UN RESEAU DE TRANSMISSION ELECTRIQUE**

VERFAHREN ZUR STEUERUNG EINES ELEKTRISCHEN ÜBERTRAGUNGSNETZES

METHOD FOR CONTROLLING AN ELECTRICAL TRANSMISSION NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.06.2019 FR 1906968**

(43) Date de publication de la demande:
**04.05.2022 Bulletin 2022/18**

(73) Titulaires:
- **Supergrid Institute**
  **69100 Villeurbanne (FR)**
- **CentraleSupélec**
  **91190 Gif-sur-Yvette (FR)**
- **Centre national de la recherche scientifique**
  **75016 Paris (FR)**
- **Université Paris-Saclay**
  **91190 Saint-Aubin (FR)**

(72) Inventeurs:
- **GONZALEZ, Juan, Carlos**
  **69007 LYON (FR)**
- **COSTAN, Valentin**
  **69007 LYON (FR)**
- **DAMM, Gilney**
  **69007 LYON (FR)**
- **BENCHAIB, Abdelkrim**
  **69007 LYON (FR)**
- **LAMNABHI-LAGARRIGUE, Françoise**
  **69007 LYON (FR)**
- **LUSCAN, Bruno**
  **69007 LYON (FR)**

(74) Mandataire: **Opilex**
**32, rue Victor Lagrange**
**69007 Lyon (FR)**

(56) Documents cités:
**EP-A1- 3 035 476     WO-A1-2012/000548**
**WO-A1-2014/053171     WO-A1-2019/097183**
**CA-A1- 2 238 970**

**Description**

L'invention concerne les stratégies de commande de réseaux électriques, en particulier les stratégies de commande en vue d'assurer la stabilité de réseaux électriques incluant plusieurs postes de conversion d'un réseau continu maillé connectés par l'intermédiaire de plusieurs lignes électriques continues, destinés à permettre l'échange de puissance entre des bus de tension alternative.

L'intégration de réseaux continus maillés dans des réseaux alternatifs est une technologie prometteuse pour permettre le contrôle de la puissance active et réactive et pour faciliter l'injection de puissance d'origine renouvelable dans le réseau alternatif.

Un dysfonctionnement dans le réseau se manifeste parfois par un déséquilibre transitoire de puissance, certaines génératrices accélérant et d'autres décélérant. On observe alors une évolution du déphasage entre les bus de tension alternative du réseau. Si le système ne peut pas revenir à l'équilibre à l'issue d'une perturbation, il peut devenir instable car les génératrices de puissance peuvent tourner de façon asynchrone et que l'échange de puissance ne peut pas alors plus être assuré. Des génératrices de puissance peuvent par exemple se retrouver déconnectées du réseau.

Une telle intégration de réseaux continus maillés réduit cependant en pratique la marge de stabilité transitoire de ces réseaux alternatifs. De tels réseaux peuvent ainsi plus facilement devenir instables après des perturbations importantes.

La publication intitulée 'Active Power Control Strategies for Transient Stability Enhancement of AC/DC Grids With VSC-HVDC Multi-Terminal Systems', par Javier Renedo et al., dans IEEE Transactions on Power Systems, vol. 31, N°6, pages 4595-4605 en novembre 2016, décrit une solution de contrôle pour améliorer la stabilité transitoire des réseaux alternatifs. Dans cette solution, différents convertisseurs de points conversion sont interconnectés par l'intermédiaire de lignes haute tension continu, une liaison point à point étant formée entre chaque couple de convertisseurs. Ce document propose notamment de mesurer les fréquences sur chacun des bus alternatifs, puis d'appliquer une correction de la puissance active de consigne de chacun des convertisseurs du réseau continu, la correction de la puissance active d'un convertisseur étant fonction d'une mesure de fréquence sur le bus réseau alternatif connecté à ce convertisseur. La fréquence sur un bus alternatif peut également être identifiée comme la vitesse angulaire de la tension. La mesure de vitesse angulaire instantanée peut être effectuée par une unité de mesure de phaseurs. D'autres états de la technique telles que EP3035476 et WO2014/053171 ont le même inconvénient.

Un tel procédé de contrôle s'avère insuffisant pour fournir une augmentation de la marge de stabilité transitoire suffisante, en particulier lors de perturbations spécifiques. De façon générale, il est délicat d'adapter de façon rapide les consignes de puissance à appliquer sur les convertisseurs pour faire face aux besoins du réseau, tout en respectant les limitations électriques des convertisseurs et des lignes haute tension continu reliant ces convertisseurs.

L'invention vise à résoudre un ou plusieurs de ces inconvénients. L'invention porte ainsi sur un procédé de commande d'un réseau de transmission électrique, tel que défini dans les revendications annexées.

L'invention porte également sur les variantes des revendications dépendantes. L'homme du métier comprendra que chacune des caractéristiques de la description ou d'une revendication dépendante peut être combinée indépendamment aux caractéristiques d'une revendication indépendante, sans pour autant constituer une généralisation intermédiaire.

D'autres caractéristiques et avantages de l'invention ressortiront clairement de la description qui en est faite ci-après, à titre indicatif et nullement limitatif, en référence aux dessins annexés, dans lesquels :

[Fig.1] est une représentation schématique d'un exemple de réseau de distribution pour la mise en oeuvre de l'invention.

[Fig.2] représente des connexions alternatives virtuelles pouvant être émulées par le réseau de la figure 1 ;

[Fig.3] représente un réseau simplifié avec interconnexion entre des bus de réseau alternatif ;

[Fig.4] est un schéma illustrant un exemple d'un mode de commande d'un convertisseur dans un système selon l'invention ;

[Fig.5] représente un réseau de référence utilisé pour mettre en oeuvre des simulations ;

[Fig.6] est un diagramme illustrant l'évolution de la vitesse de génératrices du réseau de référence lors de la mise en oeuvre de l'invention ;

[Fig.7] est un diagramme illustrant l'évolution du déphasage entre des génératrices du réseau de référence lors de la mise en oeuvre de l'invention ;

[Fig.8] est un diagramme illustrant l'évolution des puissances de convertisseurs mis en oeuvre par un procédé de commande selon l'invention dans le réseau de référence ;

[Fig.9] est un diagramme illustrant la désynchronisation de génératrices pour le réseau de la figure 5 exploité selon l'état de la technique ;

[Fig.10] est un schéma d'un exemple de mode de commande de convertisseur dans un cas particulier de mise en oeuvre de l'invention ;

[Fig.11] est un diagramme illustrant l'évolution des écarts d'angle pour la mise en oeuvre d'un réseau mettant en oeuvre le mode de commande de convertisseur pour le cas particulier de la figure 10.

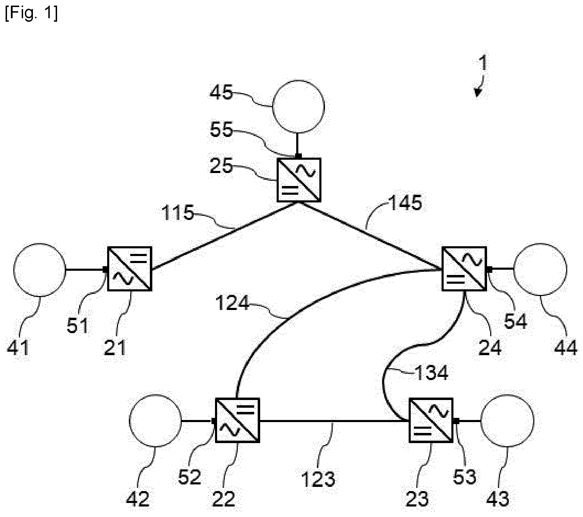

La figure 1 illustre schématiquement un exemple de réseau de distribution électrique 1, incorporant un réseau haute tension continu à postes de conversion multiples. Le réseau de distribution électrique comporte ainsi des postes de conversion, incluant chacun un convertisseur alternatif/continu respectif. Les postes de conversion incluent des convertisseurs 21 à 25 respectifs. Les convertisseurs 21 à 25 sont par exemple de type convertisseurs modulaires multiniveaux. Chacun des convertisseurs 21 à 25 comporte une interface continu connectée à au moins une interface continu d'un autre convertisseur, par l'intermédiaire d'une ligne haute tension continu. Les interfaces continu des convertisseurs 21 et 25 sont ainsi connectées par l'intermédiaire de la ligne haute tension 115, les interfaces continu des convertisseurs 24 et 25 sont ainsi connectées par l'intermédiaire de la ligne haute tension 145, les interfaces continu des convertisseurs 22 et 23 sont ainsi connectées par l'intermédiaire de la ligne haute tension 123, les interfaces continu des convertisseurs 22 et 24 sont ainsi connectées par l'intermédiaire de la ligne haute tension 124, et les interfaces continu des convertisseurs 23 et 24 sont ainsi connectées par l'intermédiaire de la ligne haute tension 123.

Ainsi, l'invention peut être mise en oeuvre pour des cas où il n'y a pas des liaisons haute tension continu point à point entre les interfaces continu de chacune des paires de convertisseurs. Ainsi, il n'y a pas de ligne haute tension continu entre les convertisseurs 21 et 22, ni entre les convertisseurs 21 et 23, ni entre les convertisseurs 21 et 24, ni entre les convertisseurs 22 et 23, ni entre les convertisseurs 22 et 25, ni entre les convertisseurs 23 et 25.

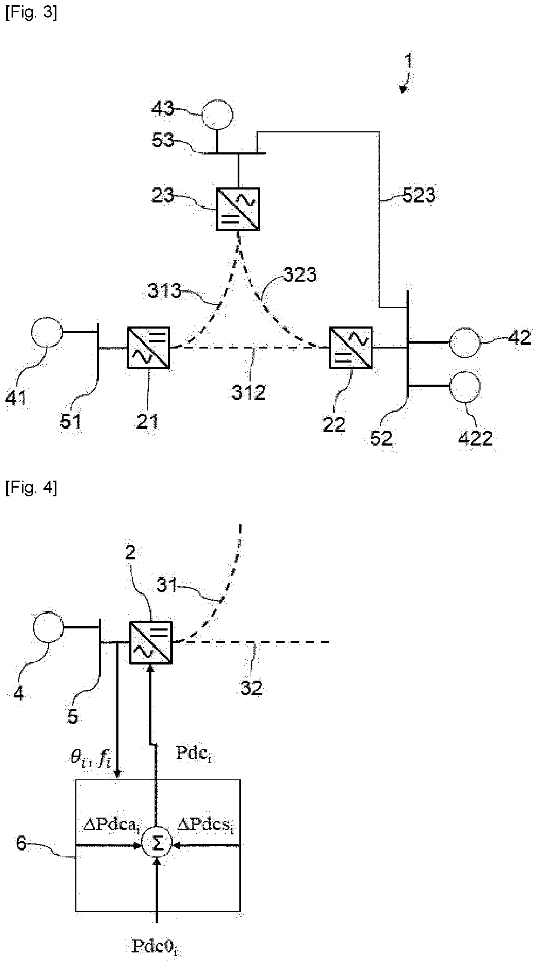

Par ailleurs, chacun des convertisseurs 21 à 25 comporte une interface alternatif respective. L'interface alternatif de chacun des convertisseurs 21 à 25 est connectée à un bus de tension alternative 51 à 55 respectif. Chacun des bus 51 à 55 est connecté à un réseau alternatif respectif 41 à 45. Dans l'exemple illustré, il n'y a pas d'interconnexions entres les réseaux alternatifs 41 à 45. Cependant, on peut envisager des interconnexions entre certains des réseaux alternatif, comme dans l'exemple simplifié illustré à la figure 3. Ainsi, dans l'exemple de la figure 3, une liaison 523 raccorde le bus 53 au bus 52. Deux machines 42 et 422 sont ici connectées au bus 52.

Selon l'invention, on module la puissance active entre deux convertisseurs du réseau (reliés directement ou non par une ligne haute tension continu) par des règles mémorisées au niveau de chacun de ces convertisseurs, en respectant des limites de puissances de ces deux convertisseurs. Des modulations de puissance active peuvent ainsi intervenir très rapidement sur le réseau, tout en respectant les règles de dimensionnement électrique des convertisseurs et des lignes haute tension continu.

Plus spécifiquement, chacun des convertisseurs d'indice i applique une consigne de puissance $Pdc_i$ avec

[Math. 13]

$$Pdc_i = \sum_{j=1}^n P_{conx_{ij}} \quad avec\ i \neq j\ \ et\ P_{conx_{ij}} = -P_{conx_{ji}}.$$

avec $Pconx_{ij}$ une référence de puissance échangée entre le bus d'indice i et le bus d'indice j par l'intermédiaire du réseau de transmission électrique 1, avec n le nombre des convertisseurs connectés aux bus de tension alternative 41 à 45.

Chaque convertisseur d'indice i mémorise, pour chacun des autres convertisseurs, la référence de puissance maximale envoyée :

[Math. 14]

$$P_{Conx_{ij}}^{Max}\ avec\ i \neq j$$

envoyée du bus i vers le bus j par l'intermédiaire du réseau de transmission électrique 1.

Chaque convertisseur d'indice i mémorise pour chacun des autres convertisseurs, la référence de puissance

maximale reçue

[Math. 15]

$$P^{min}_{Conx_{ij}} \; avec \; i \neq j$$

reçue par le bus i provenant du bus j par l'intermédiaire du réseau de transmission électrique 1.

Chaque convertisseur d'indice i définit chaque référence de puissance Pconx$_{ij}$ de sorte qu'elle respecte les valeurs de puissance maximale envoyée et de puissance maximale reçue, telles que mémorisées.

Avantageusement :

[Math. 16]

$$P^{min}_{Conx_{ij}} = -P^{Max}_{Conx_{ij}}$$

Avantageusement, pour définir chaque référence de puissance Pconx$_{ij}$, chaque convertisseur d'indice i mémorise sa puissance active maximum envoyée sur le réseau de transmission 1 :

[Math. 17]

$$P^{Max}_{DC_i}$$

et chaque convertisseur d'indice i mémorise sa puissance active maximum reçue par le réseau de transmission 1 :

[Math. 18]

$$P^{min}_{DC_i}$$

chaque convertisseur d'indice i définissant la référence de puissance Pconx$_{ij}$ de sorte que les relations suivantes soient vérifiées :

[Math. 19]

$$P^{Max}_{DC_i} \geq \sum_{j=1}^{n} P^{Max}_{Conx_{ij}} \; avec \; i \neq j$$

[Math. 20]

$$P^{min}_{DC_i} \leq \sum_{j=1}^{n} P^{min}_{Conx_{ij}} \; avec \; i \neq j$$

avec

[Math. 21]

$$P^{Max}_{Conx_{ij}} = -P^{min}_{Conx_{ji}} \; avec \; i \neq j.$$

Selon un mode de fonctionnement en lien avec un opérateur du réseau de transmission 1, le procédé de commande comprend :

- pour chacun des convertisseurs d'indice i, on récupère une valeur de puissance active de consigne PdcOi appliquée par un opérateur du réseau de transmission 1;
- chacun des convertisseurs d'indice i modifie la puissance active de consigne PdcOi d'une valeur ∆Pi, avec PdcOi + ∆Pi = Pdci.

Ainsi, la modification ∆Pi de la valeur de puissance active de consigne est mise en oeuvre de façon à respecter les règles précédentes sur les valeurs Pdci.

Le fonctionnement au niveau d'un poste de conversion incluant un convertisseur 2 pour la mise en oeuvre d'une variante de l'invention est illustré par l'intermédiaire du schéma de la figure 4. Selon cette variante, on met en oeuvre une correction de puissance synchronisante et une correction de puissance amortissante. Selon cette variante, on peut également ne mettre en oeuvre que la correction de puissance synchronisante ou que la correction de puissance amortissante.

Les opérations suivantes sont réalisées pour chacun des convertisseurs 2 des postes de conversion. Pour un convertisseur 2 d'indice i présent dans un poste de conversion, l'opérateur fournit une valeur de puissance active de consigne PdcOi. Le circuit de commande 6 du convertisseur 2 récupère ainsi cette valeur de puissance active de consigne PdcOi. Le circuit de commande 6 récupère des valeurs instantanées de tension Vi, d'angle de tension $\theta_i$ et avantageusement de fréquence $f_i$ de cette tension, au niveau du bus 5 de tension alternative connecté au réseau alternatif 4. La récupération des valeurs Vi, $\theta_i$ et $f_i$ peut être réalisée par boucle à verrouillage de phase sur le bus 5. L'interface continu du convertisseur 2 est ici connectée aux lignes haute tension continu 31 et 32, pour connexion point à point avec d'autres convertisseurs d'autres postes de conversion.

Le circuit de commande 6 modifie la puissance active de consigne PdcOi, en appliquant la valeur $Pdc_i$ de puissance active de consigne au convertisseur 2, en ajoutant un terme $\Delta Pdcs_i$ à la valeur à la puissance active de consigne PdcOi, avec :

[Math. 22]

$$\Delta P_{dcs_i} = \sum_{j=1}^{n} k_{\delta_{ij}}((\theta_i - \theta_j) - \theta ref_{ij}) \ avec \ i \neq j \ \ et \ k_{\delta_{ij}} = k_{\delta_{ji}}$$

avec n le nombre des convertisseurs connectés aux bus de tension alternative, avec $k\delta_{ij}$ un paramètre de réglage de contribution à une puissance corrective de synchronisation, $\theta ref_{ij}$ une référence de la différence des angles entre les bus i et j en régime établi. Avantageusement, $\theta ref_{ij}$ a une valeur non nulle pour tenir compte d'un déphasage de référence entre les bus i et j.

Avec un tel mode de fonctionnement, on peut ajouter au moins un terme de puissance synchronisante entre chacune des paires de convertisseurs, même en l'absence de liaison haute tension point à point entre ces convertisseurs. Dans un tel mode de fonctionnement, l'opérateur du réseau de transmission 1 n'a à fournir que les valeurs de puissance active de consigne PdcOi et les références des angles $\theta ref_{ij}$ aux convertisseurs.

Avantageusement, le convertisseur d'indice i détermine un convertisseur k vers lequel la valeur de puissance $Pconx_{ik}$ échangée entre le bus d'indice i et le bus d'indice k par l'intermédiaire du réseau de transmission électrique 1 est supérieure à la valeur de puissance respective que le convertisseur d'indice i émet vers chacun des autres convertisseurs si

[Math. 23]

$$(\theta_i - \theta_k) > (\theta_i - \theta_j) \ avec \ i \neq j \ \ et \ j \neq k$$

Avantageusement, le circuit de commande 6 modifie la puissance active de consigne PdcOi, en appliquant la valeur $Pdc_i$ de puissance active de consigne au convertisseur 2, en ajoutant un terme $\Delta Pdca_i$ à la valeur à la puissance active de consigne PdcOi, avec :

[Math. 24]

$$\Delta P_{dca_i} = \sum_{j=1}^{n} k_{f_{ij}}(f_i - f_j) \ avec \ i \neq j \ \ et \ k_{f_{ij}} = k_{f_{ji}}$$

avec kf$_{ij}$ un paramètre de réglage de contribution à une puissance corrective d'amortissement.

La valeur Pdc$_i$ de puissance active de consigne peut alors prendre la valeur suivante :

[Math. 25]

$$P_{dc_i} = P_{dc0_i} + \Delta P_{dca_i} + \Delta P_{dcs_i}$$

Pour l'exemple de réseau simplifié illustré à la figure 3, les valeurs de puissance active de consigne pour les convertisseurs 21 à 23 sont les suivantes :

[Math. 26]

$$P_{dc1} = P_{dc01} + k_{\delta_{12}}(\theta_1 - \theta_2 - \theta ref_{12}) + k_{\delta_{13}}(\theta_1 - \theta_3 - \theta ref_{13}) + k_{f_{12}}(f_1 - f_2) + k_{f_{13}}(f_1 - f_3)$$

[Math. 27]

$$P_{dc2} = P_{dc02} + k_{\delta_{21}}(\theta_2 - \theta_1 - \theta ref_{21}) + k_{\delta_{23}}(\theta_2 - \theta_3 - \theta ref_{23}) + k_{f_{21}}(f_2 - f_1) + k_{f_{23}}(f_2 - f_3)$$

[Math. 28]

$$P_{dc3} = P_{dc03} + k_{\delta_{31}}(\theta_3 - \theta_1 - \theta ref_{31}) + k_{\delta_{32}}(\theta_3 - \theta_2 - \theta ref_{32}) + k_{f_{31}}(f_3 - f_1) + k_{f_{32}}(f_3 - f_2)$$

Pour le calcul des paramètres kδ$_{ij}$ et kf$_{ij}$, on tient compte du fait que la dynamique du réseau haute tension continu est beaucoup plus rapide que la dynamique des réseaux alternatifs et des machines électromécaniques qui y sont connectées. Les équations algébriques décrivant le comportement du réseau haute tension continu peuvent ainsi négliger sa dynamique, en représentant chacun des postes de conversion par son modèle d'injection de courant.

En l'absence de dispositif de stockage d'énergie notable dans le réseau haute tension continu, la somme des puissances injectées vers ce réseau haute tension continu est définie comme égale à la somme des puissances sortant de ce réseau haute tension continu. Dans l'exemple de la figure 3, la relation suivante doit être respectée :

[Math. 29]

$$P_{dc1} + P_{dc2} + P_{dc3} = 0$$

En outre, en fonctionnement normal, le contrôle en courant et tension garantit la relation suivante :

[Math. 30]

$$P_{dc01} + P_{dc02} + P_{dc03} = 0$$

Les paramètres de réglage de contribution doivent alors respecter la règle suivante:

[Math. 31]

$$k_{\delta_{ij}} = k_{\delta_{ji}} \ et \ k_{f_{ij}} = k_{f_{ji}}$$

En garantissant que la somme des puissances de consigne soit toujours nulle même avec les termes correctifs, il est possible de mettre en oeuvre de tels calculs dans une couche supérieure dans tout type de contrôle. L'invention peut donc aisément être mise en oeuvre à la fois lorsque le réseau haute tension continu est configuré en maître/esclaves et lorsque le réseau haute tension continu est configuré pour que les postes de conversion fonctionnent en contrôle de statisme en tension (pour voltage-droop control en langue anglaise).

Le terme de puissance synchronisante se comporte comme une ligne de transmission entre les convertisseurs i et j. Pour émuler une ligne de transmission entre les convertisseurs i et j, il suffit de calculer un gain k$\delta_{ij}$ approprié.

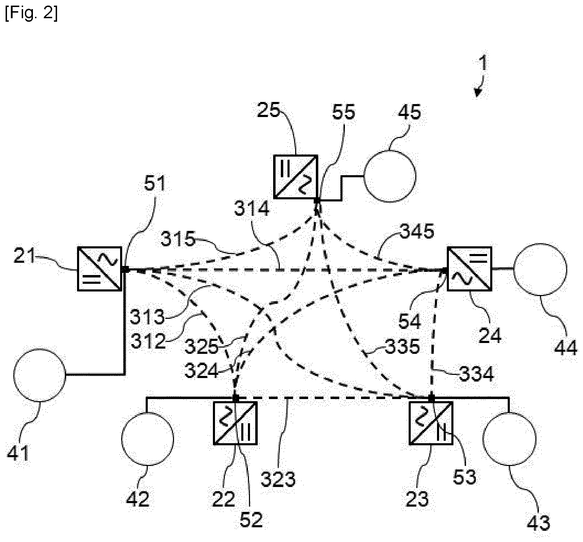

A partir du réseau haute tension continu multipoints 1, un réseau d'admittances virtuelles connectées aux bus AC peut être émulé, même en l'absence de connexions entre ces bus AC. On peut ainsi noter qu'un réseau haute tension continu comportant un nombre n de postes de conversion dispose d'un nombre n-1 de degrés de liberté. La figure 2 représente ainsi des connexions alternatives virtuelles pouvant être émulées par le réseau 1 de la figure 1 avec le procédé de commande décrit. Ainsi, une liaison alternative peut être émulée entre l'interface alternative d'un des postes de conversion 21 à 25, et l'interface alternative de chacun des autres de ces postes de conversion 21 à 25. Comme illustré :

- des liaisons alternatives 312 à 315 peuvent être émulées entre l'interface alternatif du convertisseur 21 d'une part et une interface alternatif respective de chacun des convertisseurs 22 à 25 ;

- des liaisons alternatives 323 à 325 peuvent être émulées entre l'interface alternatif du convertisseur 22 d'une part et une interface alternatif respective de chacun des convertisseurs 23 à 25 ;

- des liaisons alternatives 334 et 335 peuvent être émulées entre l'interface alternatif du convertisseur 23 d'une part et une interface alternatif respective de chacun des convertisseurs 24 et 25 ;

- une liaison alternative 345 peut être émulée entre l'interface alternatif du convertisseur 24 d'une part et une interface alternatif respective du convertisseur 25.

Ainsi, de la puissance corrective de synchronisation ou de la puissance corrective d'amortissement peut toujours être intégrée entre deux postes de conversion du réseau 1, même en l'absence de liaison haute tension continu point à point entre ces postes de conversion.

De façon générale un tel réseau alternatif multipoints avec un nombre m de noeuds connectés à des systèmes externes peut être réduit à un modèle de lignes entre ces m noeuds, par la technique de réduction de Kron.

L'injection de puissance de synchronisation dans le réseau alternatif peut notamment être réalisée de deux façons selon l'invention.

Selon une première solution :

[Math. 32]

$$\Delta P_{dcs_i} = \sum_{j=1}^{n} k_{\delta_{ij}}((\theta_i - \theta_j) - \theta ref_{ij})$$

$\theta ref_{ij}$ est une différence d'angle de référence calculée par le calcul de flux de puissance et déterminé par une couche de contrôle, par exemple le contrôle secondaire.

Selon une seconde solution, les gains k$\delta_{ij}$ sont calculés de façon à obtenir le point d'équilibre souhaité. Ainsi, si l'opérateur du réseau souhaite obtenir la puissance Pdc$_0$ en régime permanent, il souhaitera injecter de la puissance synchronisante seulement entre les bus d'indices i et j. Cette puissance peut se décomposer comme suit :

[Math. 33]

$$P_{dcs_0} = P_0 \quad + k_{\delta_{ij}}(\theta_i - \theta_j)$$

On peut ainsi définir les valeurs de $P_0$ et $k\delta_{ij}$ pour obtenir la valeur souhaitée de $Pdcs_0$, en régime établi.

La puissance transmise entre les postes de conversion i et j par ligne de transmission virtuelle ou émulée peut se définir comme suit :

[Math. 34]

$$P_{Vij} = V_i \ * \ V_j * Y_{ij} * \sin(\theta_i - \theta_j)$$

Avec $Y_{ij}$ une valeur d'admittance virtuelle émulée entre les interfaces alternatif des postes de conversion i et j.

Comme Vi et Vj ont des valeurs connues, on peut émuler le comportement souhaité pour la valeur d'admittance $Y_{ij}$.

La puissance de référence souhaitée par l'opérateur du réseau 1 peut se définir comme suit :

[Math. 35]

$$P_{dcs_0} = P_0 \quad + k_{\delta_{ij}} * sin(\theta_i - \theta_j)$$

Avec $k\delta_{ij}$ = Vi * Vj * $Y_{ij}$. L'opérateur du réseau 1 peut ne calculer que le terme $P_0$ ou alors fixer $P_0$=0.

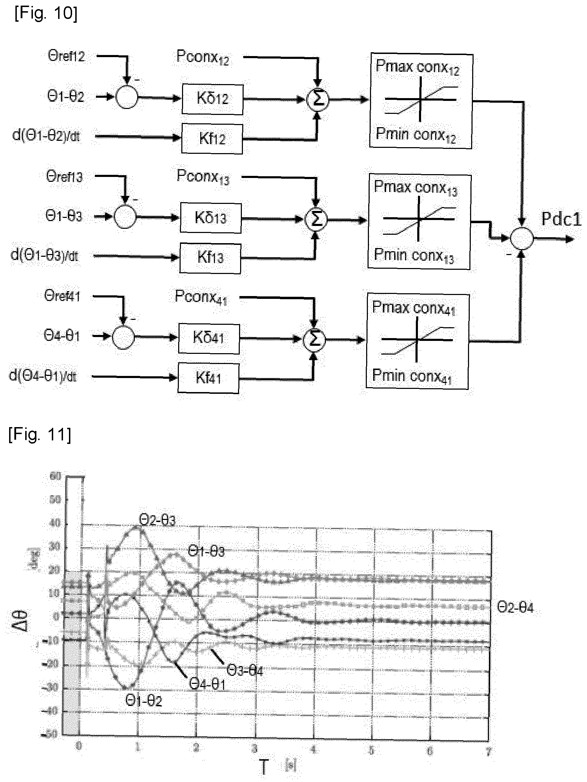

Un exemple pratique de commande d'un réseau 1 à quatre postes de conversions est illustré à la figure 10, au niveau du convertisseur d'indice 1 en mettant en oeuvre les limitations de puissance, une correction de puissance amortissante et une correction de puissance synchronisante.

La figure 11 est un diagramme illustrant les déphasages entre les bus de tension alternative pour l'application au cas particulier du réseau et du mode de commande décrits en référence à la figure 10, lors d'un exemple de dysfonctionnement. On constate que tous les déphasages convergent, ce qui correspond bien à une stabilisation du réseau après un intervalle de temps assez réduit.

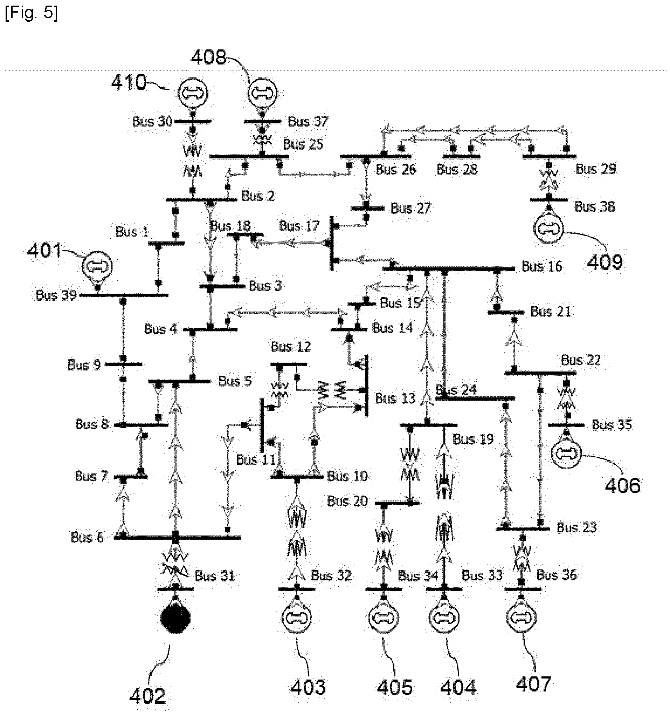

Des simulations ont été réalisées pour l'exemple du modèle de réseau défini par l'IEEE pour la Nouvelle Angleterre et comportant 39 bus alternatif et 10 génératrices 401 à 410, tel que reproduit à la figure 5. Dans l'exemple de la simulation, le réseau comporte trois postes de conversion alternatif-continu. Dans ce modèle, l'interface alternatif d'un poste de conversion est connectée au bus de référence 39. L'interface alternatif d'un autre poste de conversion est connectée au bus de référence 16. L'interface alternatif d'un autre poste de conversion est connectée au bus de référence 19.

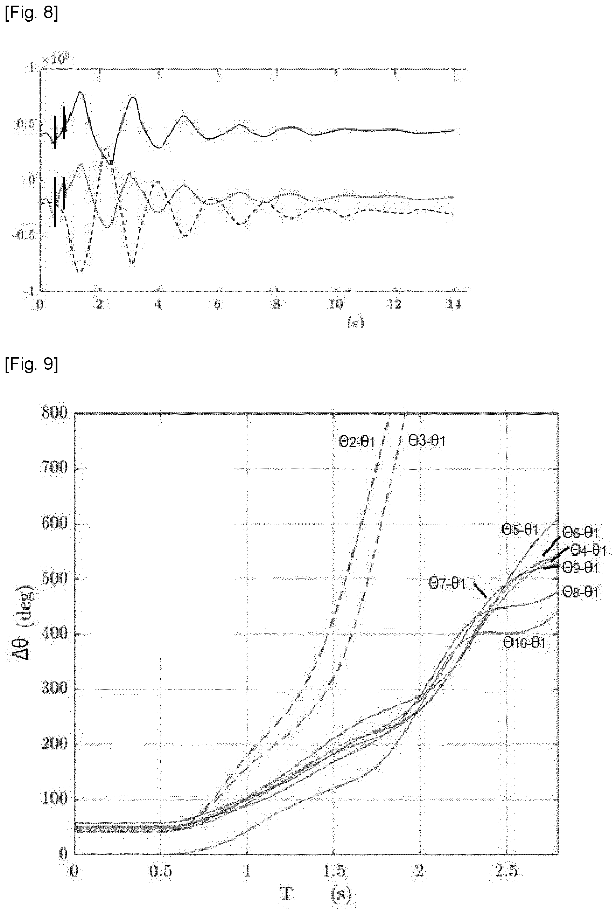

On a pris comme hypothèse un défaut intervenant sur la ligne entre les bus référencés 5 et 8. On constate qu'en maintenant les consignes de puissances des convertisseurs constantes, les génératrices connectées aux bus référencés 31 et 10 se désynchronisent progressivement et finissent par être isolées du système, comme cela est illustré dans les résultats de la figure 9. La valeur θi du diagramme de la figure 9 correspond à la génératrice 40i de la figure 5.

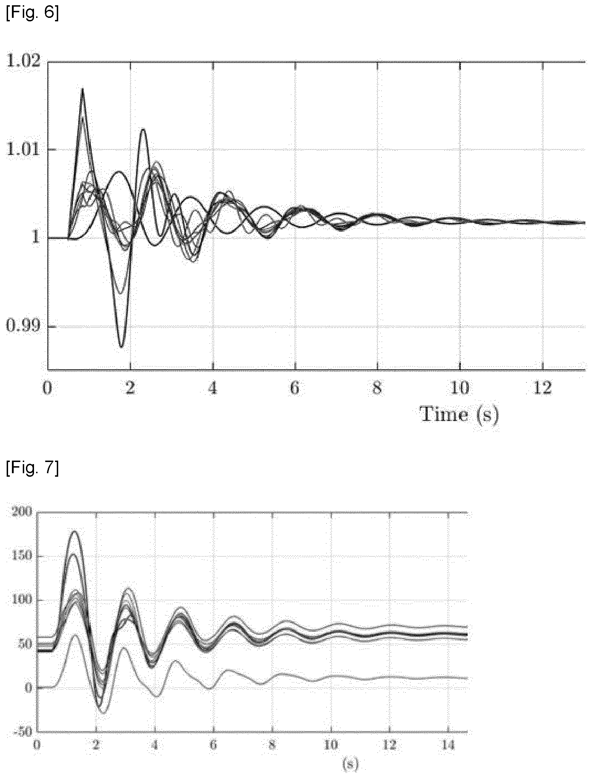

Avec la mise en oeuvre d'un procédé de commande selon l'invention, on a obtenu les résultats illustrés à la figure 6. Le diagramme de la figure 6 illustre l'évolution de la vitesse des génératrices en fonction du temps, après l'apparition d'un défaut sur la ligne entre les bus référencés 5 et 8. On constate qu'après le défaut, toutes les génératrices sont confrontées à une oscillation. Mais cette oscillation est amortie et les vitesses de rotation des génératrices atteignent une valeur stable après quelques secondes.

La figure 7 illustre le déphasage angulaire entre la génératrice de référence 1 par rapport aux autres génératrices, lors de l'utilisation d'un procédé de commande selon l'invention. On constate qu'après un défaut, le déphasage oscille mais reste limité. Le déphasage est rapidement amorti pour se stabiliser à une valeur constante après quelques secondes, pour chacune autres des génératrices.

La figure 8 est un diagramme illustrant la puissance modulée par les convertisseurs, lors de la mise en oeuvre d'un procédé de commande selon l'invention. Les modulations de puissance mises en oeuvre par l'intermédiaire des termes correctifs au niveau des trois postes de conversion permettent d'obtenir les résultats illustrés précédemment.

**Revendications**

1. Procédé de commande d'un réseau de transmission électrique (1), le réseau de transmission (1) comprenant plusieurs lignes haute tension continu (320) et n convertisseurs convertisseurs alternatif/continu (21, 22, 23, 24, 25) identifiés par un indice i respectif, avec n supérieur ou égal à 3, lesdits convertisseurs étant interconnectés par lesdites lignes haute tension continu, chacun desdits convertisseurs alternatif/continu (321) étant connecté d'une part à un bus de tension alternative (11) identifié par un indice i respectif et d'autre part à une desdites lignes haute tension continu (320), le procédé est caractérisé et comprend:

   - chacun des convertisseurs d'indice i applique une consigne de puissance Pdci avec

   [Math. 13]

   $$\mathrm{Pdc_i} = \sum_{j=1}^{n} P_{conx_{ij}} \quad avec\ i \neq j\ \ et\ P_{conx_{ij}} = -P_{conx_{ji}}.$$

   avec j un indice désignant tout bus de tension alternative et tout convertisseur qui lui est connecté parmi le nombre n et différent du bus de tension alternative i et dudit convertisseur qui lui est connecté, avec $P_{conx_{ij}}$ une référence de puissance échangée entre le bus d'indice i et le bus d'indice j par l'intermédiaire du réseau de transmission électrique (1), avec n le nombre desdits convertisseurs connectés auxdits bus de tension alternative ; Chaque convertisseur d'indice i mémorisant pour chacun desdits autres convertisseurs, la référence de puissance maximale envoyée

   [Math. 14]

   $$P_{Conx_{ij}}^{Max} \ avec\ i \neq j$$

   envoyée du bus i vers le bus j par l'intermédiaire du réseau de transmission électrique ;
   Chaque convertisseur d'indice i mémorisant pour chacun desdits autres convertisseurs, la référence de puissance maximale reçue

   [Math. 15]

   $$P_{Conx_{ij}}^{min} \ avec\ i \neq j$$

   reçue par le bus i provenant du bus j par l'intermédiaire du réseau de transmission électrique ;

   - Chaque convertisseur d'indice i définissant la référence de puissance $P_{conx_{ij}}$ de sorte qu'elle respecte les valeurs mémorisées de puissance maximale envoyée et de puissance maximale reçue.

2. Procédé de commande d'un réseau de transmission électrique selon la revendication 1, dans lequel :

   - chaque convertisseur d'indice i mémorise sa puissance active maximum envoyée sur le réseau de transmission

   [Math. 17]

   $$P_{DC_i}^{Max}$$

   - et chaque convertisseur d'indice i mémorise sa puissance active maximum reçue par le réseau de transmission

   [Math. 18]

   $$P_{DC_i}^{min}$$

chaque convertisseur d'indice i définissant la référence de puissance Pconx$_{ij}$ de sorte que les relations suivantes soient vérifiées :

[Math. 19]

$$P_{DC_i}^{Max} \geq \sum_{j=1}^{n} P_{Conx_{ij}}^{Max} \; avec \; i \neq j$$

[Math. 20]

$$P_{DC_i}^{min} \leq \sum_{j=1}^{n} P_{Conx_{ij}}^{min} \; avec \; i \neq j$$

avec

[Math. 21]

$$P_{Conx_{ij}}^{Max} = -P_{Conx_{ji}}^{min} \; avec \; i \neq j.$$

3. Procédé de commande d'un réseau de transmission électrique selon la revendication 1 ou 2, dans lequel :

- pour chacun des convertisseurs d'indice i, on récupère une valeur de puissance active de consigne PdcOi appliquée par un opérateur du réseau de transmission ;
- chacun des convertisseurs d'indice i modifie la puissance active de consigne PdcOi d'une valeur ΔPi, avec PdcOi + ΔPi = Pdci.

4. Procédé de commande d'un réseau de transmission électrique selon la revendication 3, comprenant :

- la récupération des valeurs instantanées V$_i$ de tension, et θ$_i$ d'angle de tension ou f$_i$ de fréquence de la tension des bus d'indice i ;
- chacun des convertisseurs d'indice i modifie la puissance active de consigne PdcOi de la valeur ΔPi incluant un terme ΔPdcs$_i$ ou un terme ΔPdca$_i$ avec:

[Math. 22]

$$\Delta P_{dcs_i} = \sum_{j=1}^{n} k_{\delta_{ij}}((\theta_i - \theta_j) - \theta ref_{ij}) \; avec \; i \neq j \;\; et \;\; k_{\delta_{ij}} = k_{\delta_{ji}}$$

[Math. 24]

$$\Delta P_{dca_i} = \sum_{j=1}^{n} k_{f_{ij}}(f_i - f_j) \; avec \; i \neq j \;\; et \;\; k_{f_{ij}} = k_{f_{ji}}$$

avec kδ$_{ij}$ un paramètre de réglage de contribution, θref$_{ij}$ une référence de la différence des angles entre les bus i et j en régime établi, kf$_{ij}$ un paramètre de réglage de contribution.

5. Procédé de commande d'un réseau de transmission électrique (3) selon la revendication 4, dans lequel θref$_{ij}$ a une valeur non nulle.

6. Procédé de commande selon la revendication 4 ou 5, dans lequel le terme ΔPdcs$_i$ ou le terme ΔPdca$_i$ est calculé par un circuit de calcul du convertisseur d'indice i.

7. Procédé de commande d'un réseau de transmission électrique (3) selon l'une quelconque des revendications précédentes, dans lequel le convertisseur d'indice i détermine un convertisseur k vers lequel la valeur de puissance

$$P_{Conx_{ik}}$$

échangée entre le bus d'indice i et le bus d'indice k par l'intermédiaire du réseau de transmission électrique (1) est supérieure à la valeur de puissance respective que le convertisseur d'indice i émet vers chacun des autres convertisseurs si

[Math. 23]

$$(\theta_i - \theta_k) > (\theta_i - \theta_j) \; avec \; i \neq j \;\; et \; j \neq k$$

8. Procédé de commande d'un réseau de transmission électrique (3) selon l'une quelconque des revendications précédentes, dans lequel au moins deux desdits bus de tension alternative sont interconnectés.

9. Procédé de commande d'un réseau de transmission électrique selon l'une quelconque des revendications précédentes, dans lequel au moins deux desdits convertisseurs n'ont pas leurs interfaces continu connectées en point à point par l'intermédiaire d'une ligne haute tension continu. 1

**Patentansprüche**

1. Verfahren zur Steuerung eines elektrischen Übertragungsnetzes (1), wobei das Übertragungsnetz (1) mehrere Gleichstrom-Hochspannungsleitungen (320) und n Wechselstrom/Gleichstrom-Umformer (21, 22, 23, 24, 25) umfasst, die durch einen jeweiligen Index i identifiziert werden, mit n größer oder gleich 3, wobei die Umformer durch die Gleichstrom-Hochspannungsleitungen miteinander verbunden sind, wobei jeder der Wechselstrom/Gleichstrom-Umformer (321) einerseits mit einem Wechselstrom-Spannungsbus (11), der durch einen jeweiligen Index i identifiziert ist, und andererseits mit einer der Gleichstrom-Hochspannungsleitungen (320) verbunden ist, das Verfahren ist gekennzeichnet und umfasst:

- jeder der Umrichter mit dem Index i wendet einen Leistungssollwert $Pdc_i$ an mit

[Gleichung 13]

$$Pdc_i = \sum_{j=1}^{n} P_{conx_{ij}} \quad avec \; i \neq j \;\; et \; P_{conx_{ij}} = -P_{conx_{ji}}.$$

wobei j ein Index ist, der jeden Wechselspannungsbus und jeden daran angeschlossenen Umformer aus einer Anzahl n bezeichnet und sich von dem Wechselspannungsbus i und dem daran angeschlossenen Umformer unterscheidet, wobei $Pconx_{ij}$ eine Bezugsleistung ist, die zwischen dem Bus des Index i und dem Bus des Index j über das elektrische Übertragungsnetz (1) ausgetauscht wird, wobei n die Anzahl der Umformer ist, die an die Wechselspannungsbusse angeschlossen sind,
wobei jeder Umformer mit Index i für jeden der anderen Umformer die maximale gesendete Bezugsleistung speichert

[Gleichung 14]

$$P_{Conx_{ij}}^{Max} \; avec \; i \neq j$$

die von dem Bus i zu dem Bus j über das elektrische Übertragungsnetz gesendet wird, wobei jeder Umformer mit Index i für jeden der anderen Umformer die empfangene maximale Bezugsleistung speichert

[Gleichung 15]

$$P_{Conx_{ij}}^{min} \; avec \; i \neq j$$

die durch den Bus i vom Bus j über das elektrische Übertragungsnetz empfangen wird,

- wobei jeder Umformer mit Index i die Bezugsleistung $Pconx_{ij}$ so definiert, dass sie die gespeicherten Werte der gesendeten maximalen Leistung und der empfangenen maximalen Leistung einhält.

**2.** Verfahren zur Steuerung eines elektrischen Übertragungsnetzes nach Anspruch 1, in dem:

jeder Umformer mit Index i seine maximale Wirkleistung speichert, die an das Übertragungsnetz gesendet wurde

[Gleichung 17]

$$P_{DC_i}^{Max}$$

-und jeder Umformer mit Index i seine maximale Wirkleistung speichert, die vom Übertragungsnetz empfangen wurde

[Gleichung 18]

$$P_{DC_i}^{min}$$

wobei jeder Umformer mit Index i die Bezugsleistung $Pconx_{ij}$ so definiert, dass die folgenden Beziehungen bestätigt sind:

[Gleichung 19]

$$P_{DC_i}^{Max} \geq \sum_{j=1}^{n} P_{Conx_{ij}}^{Max} \; avec \; i \neq j$$

[Gleichung 20]

$$P_{DC_i}^{Max} \leq \sum_{j=1}^{n} P_{Conx_{ij}}^{Max} \; avec \; i \neq j$$

mit

[Gleichung 21]

$$P_{Conx_{ij}}^{Max} = -P_{Conx_{ji}}^{min} \; avec \; i \neq j.$$

**3.** Verfahren zur Steuerung eines elektrischen Übertragungsnetzes nach Anspruch 1 oder 2, in dem:

- für jeden der Umformer mit Index i ein Soll-Wirkleistungswert PdcOi abgerufen wird, der von einem Betreiber des Übertragungsnetzes angewendet wird,
- jeder der Umformer mit Index i die Soll-Wirkleistung PdcOi um einen Wert $\Delta Pi$ ändert, wobei $Pdc0_i + \Delta Pi = Pdc_i$ ist.

4. Verfahren zur Steuerung eines elektrischen Übertragungsnetzes nach Anspruch 3, umfassend:

- die Rückgewinnung der Momentanwerte $V_i$ der Spannung, und $\theta_i$ des Spannungswinkels oder $f_i$ der Frequenz der Spannung der Busse mit Index i,
- jeder der Umformer mit Index i die Soll-Wirkleistung PdcOi um den Wert ΔPi einschließlich eines Terms ΔPdcs$_i$ oder eines Terms ΔPdca$_i$ ändert mit:

[Gleichung 22]

$$\Delta P_{dcs_i} = \sum_{j=1}^{n} k_{\delta_{ij}}\left(\left(\theta_i - \theta_j\right) - \theta ref_{ij}\right) \; avec \; i \neq j \quad et \; k_{\delta_{ij}} = k_{\delta_{ji}}$$

[Gleichung 24]

$$\Delta P_{dca_i} = \sum_{j=1} k_{f_{ij}}(f_i - f_j) \; avec \; i \neq j \quad et \; k_{f_{ij}} = k_{f_{ji}}$$

mit k$\delta_{ij}$ einem Beitragseinstellparameter, $\theta$ref$_{ij}$ einem Bezug des Winkelunterschieds zwischen den Bussen i und j im stationären Zustand, kf$_{ij}$ einem Beitragseinstellparameter.

5. Verfahren zur Steuerung eines elektrischen Übertragungsnetzes (3) nach Anspruch 4, in dem $\theta$ref$_{ij}$ einen von Null verschiedenen Wert hat.

6. Verfahren zur Steuerung nach Anspruch 4 oder 5, in dem der Term ΔPdcs$_i$ oder der Term ΔPdca$_i$ von einer Berechnungsschaltung des Umformers mit Index i berechnet wird.

7. Verfahren zur Steuerung eines elektrischen Übertragungsnetzes (3) nach einem der vorhergehenden Ansprüche, wobei der Umformer mit Index i einen Umformer k bestimmt, zu dem der Leistungswert

$$P_{Conx_{ik}}$$

der zwischen dem Bus mit Index i und dem Bus mit Index k über das elektrische Übertragungsnetz (1) ausgetauscht wird, größer als der jeweilige Leistungswert ist, den der Umformer mit Index i an jeden der anderen Umformer sendet, wenn

[Gleichung 23]

$$(\theta_i - \theta_k) > \left(\theta_i - \theta_j\right) \; avec \; i \neq j \quad et \; j \neq k$$

8. Verfahren zur Steuerung eines elektrischen Übertragungsnetzes (3) nach einem der vorhergehenden Ansprüche, in dem mindestens zwei der Wechselspannungsbusse miteinander verbunden sind.

9. Verfahren zur Steuerung eines elektrischen Übertragungsnetzes nach einem der vorhergehenden Ansprüche, in dem mindestens zwei der Umformer ihre Gleichstromschnittstellen nicht über eine Gleichstrom-Hochspannungsleitung Punkt-zu-Punkt verbunden haben.

**Claims**

1. A method of controlling an electrical transmission network (1), wherein the transmission network (1) comprises a plurality of high-voltage DC lines (320) and n AC/DC converters (21, 22, 23, 24, 25) identified by a respective index i, with n being greater than or equal to 3, said converters being interconnected by said high-voltage DC lines, each of said AC/DC converters (321) being connected on the one hand to an AC voltage bus (11) identified by a respective index i and on the other hand to one of said high-voltage DC lines (320), the method comprising:

- each of the converters of index i applies a power setpoint $Pdc_i$ with

[Math. 36]

$$\mathrm{Pdc_i} = \sum_{j=1}^{n} P_{conx_{ij}} \qquad where\ i \neq j\ and\ P_{conx_{ij}} = -P_{conx_{ji}}.$$

j being an index designating any AC voltage bus and any converter connected thereto among the number n and different from the AC voltage bus i and from said converter connected thereto, $P_{conx_{ij}}$ being a power reference exchanged between the bus of index i and the bus of index j via the electrical transmission network (1), with n the number of said converters connected to said AC voltage buses;
each converter of index i storing for each of said other converters, the maximum power reference sent

[Math. 37]

$$P_{Conx_{ij}}^{Max}\ where\ i \neq j$$

sent from bus i to bus j via the electrical transmission network;
each converter of index i storing for each of the other converters, the maximum power reference received

[Math. 38]

$$P_{Conx_{ij}}^{min}\ where\ i \neq j$$

received by bus i from bus j via the electrical transmission network;

- each converter of index i defining the power reference $P_{conx_{ij}}$ so that it observes the stored values of maximum power sent and maximum power received.

2. A method for controlling an electrical transmission network according to claim 1, wherein:

- each converter of index i stores its maximum active power sent to the transmission network

[Math. 39]

$$P_{DC_i}^{Max}$$

- and each converter of index i stores its maximum active power received by the transmission network

[Math. 40]

$$P_{DC_i}^{min}$$

each converter of index i defining the power reference $P_{conx_{ij}}$ such that the following relationships are verified:

[Math. 41]

$$P_{DC_i}^{Max} \geq \sum_{j=1}^{n} P_{Conx_{ij}}^{Max}\ where\ i \neq j$$

[Math. 42]

$$P_{DC_i}^{min} \leq \sum_{j=1}^{n} P_{Conx_{ij}}^{min} \text{ where } i \neq j$$

with

[Math. 43]

$$P_{Conx_{ij}}^{Max} = -P_{Conx_{ji}}^{min} \text{ where } i \neq j.$$

3. A method for controlling an electrical transmission network according to claim 1 or 2, wherein:

- for each of the converters of index i, a desired active power PdcOi applied by a transmission network operator is recovered;
- each of the converters of index i modifies the desired active power PdcOi by a value $\Delta$Pi, with PdcOi + $\Delta$Pi = $Pdc_i$.

4. A method for controlling an electrical transmission network according to claim 3, comprising:

- recovery of the instantaneous values $v_i$ of voltage, and $\theta_i$ of voltage angle or $f_i$ of frequency of the voltage of the index i buses; and wherein:
- each of the converters of index i modifies the desired active power PdcOi by the value $\Delta$Pi including a term $\Delta Pdcs_i$ or a term $\Delta Pdca_i$ with:

[Math. 44]

$$\Delta P_{dcs_i} = \sum_{j=1}^{n} k_{\delta_{ij}}\left(\left(\theta_i - \theta_j\right) - \theta ref_{ij}\right) \text{ where } i \neq j \text{ and } k_{\delta_{ij}} = k_{\delta_{ji}}$$

[Math. 45]

$$\Delta P_{dca_i} = \sum_{j=1}^{n} k_{f_{ij}}(f_i - f_j) \text{ where } i \neq j \text{ and } k_{f_{ij}} = k_{f_{ji}}$$

where $k\delta_{ij}$ is a contribution adjustment parameter, $\theta ref_{ij}$ is a reference of the difference of the angles between buses i and j in steady state, and $kf_{ij}$ is a contribution adjustment parameter.

5. A method for controlling an electrical transmission network (3) according to claim 4, wherein $\theta ref_{ij}$ has a non-zero value.

6. A control method according to claim 4 or 5, wherein the term $\Delta Pdcs_i$ or the term $\Delta Pdca_i$ is calculated by a calculation circuit of the converter of index i.

7. A method for controlling an electrical transmission network (3) according to any one of the preceding claims, wherein the converter of index i determines a converter k to which the power value

[Math. 46]

$$P_{Conx_{ik}}$$

exchanged between the bus of index i and the bus of index k via the electrical transmission network (1) is greater than the respective power value that the converter of index i emits to each of the other converters if

[Math. 47]

$$\left(\theta_i - \theta_k\right) > \left(\theta_i - \theta_j\right) \ where \ i \neq j \ and \ \mathrm{j} \neq \mathrm{k}$$

8. A method for controlling an electrical transmission network (3) according to any one of the preceding claims, wherein at least two of said AC voltage buses are interconnected.

9. A method for controlling an electrical transmission network according to any one of the preceding claims, wherein at least two of said converters do not have their DC interfaces connected point to point via a high-voltage DC line.

[Fig. 1]

[Fig. 2]

[Fig. 3]

[Fig. 4]

[Fig. 5]

[Fig. 6]

[Fig. 7]

[Fig. 8]

[Fig. 9]

[Fig. 10]

[Fig. 11]

## RÉFÉRENCES CITÉES DANS LA DESCRIPTION

**Documents brevets cités dans la description**

- EP 3035476 A

- WO 2014053171 A

**Littérature non-brevet citée dans la description**

- **JAVIER RENEDO et al.** *IEEE Transactions on Power Systems,* Novembre 2016, vol. 31 (6), 4595-4605